Europäisches Patentamt

European Patent Office

Office européen des brevets

(11) Publication number: **0 180 142**
**B1**

(12) **EUROPEAN PATENT SPECIFICATION**

(45) Date of publication of patent specification: **04.01.89**

(21) Application number: **85113468.4**

(22) Date of filing: **23.10.85**

(51) Int. Cl.⁴: **B 60 S 1/34**

(54) **Bearing device of bending and stretching type windshield wiper.**

(30) Priority: **29.10.84 JP 163376/84 u**

(43) Date of publication of application:
**07.05.86 Bulletin 86/19**

(45) Publication of the grant of the patent:
**04.01.89 Bulletin 89/01**

(84) Designated Contracting States:
**DE FR GB IT**

(56) References cited:
**DE-A-1 960 783**
**DE-A-2 236 643**
**FR-A-1 053 519**
**US-A-3 570 039**

(73) Proprietor: **ASMO CO. LTD.**
**390 Umeda**
**Kosai-shi Shizuoka-ken (JP)**

(72) Inventor: **Fuzita, Kazuhiro**
**101, Sakea-Machi**
**Toyohashi Aichi (JP)**
Inventor: **Nishizawa, Kazunori**
**810-1, Wahizu**
**Kosai Shizuoka (JP)**
Inventor: **Imamura, Shinzi**
**1-648, Shinzyo Okasaki Umeda-Nyukaichi**
**Kosai Shizuoka (JP)**

(74) Representative: **Uri, Peter Alexander, Dipl.-Ing. et al**
**Patentanwälte Strohschänk, Uri & Strasser**
**Innere Wiener Strasse 8**
**D-8000 München 80 (DE)**

## Description

The invention relates to a bearing device of a windshield wiper comprising a crank arm for rotating to and fro about an axis of rotation, a wiper arm, a fixed socket which is concentric to the axis of rotation of the crank arm, a blade fastened to the wiper arm, a stationary gear provided with a boss mounted within the socket, an intermediate gear meshing with said stationary gear and carried on a shaft mounted in said crank arm, a driven gear meshing with the intermediate gear mounted in said crank arm and secured to a shaft to one end of which the root of the wiper arm is fastened.

A bearing device of the above mentioned kind in accordance with the prior art portion of claim 1 is already known from FR—A—1 053 519. In this bearing device a drive shaft of the crank arm rotates in the bore of a stationary pinion. Since the drive shaft has a relatively small diameter, a large surface pressure is generated on the outer periphery of the drive shaft so that due to wear the useful operational lifetime is very limited.

Generally a bending and stretching type windshield wiper of which an object is to increase the area of the glass being swept by the wiper blade is disclosed in US—A—3,570,039, wherein a gear train is arranged between the output shaft of the wiper link and the shaft for installing the wiper arm head or root. However, there is the problem in this prior art that the angle swept by the wiper blade is largely varying between dry glass and wet glass, because a boss part of a crank arm serving as a gear housing containing the gear train is axially connected with a driving gear by a projection means and a groove, and a radial gap is liable to arise between them. Moreover, there is a limitation of useful lifetime and diameter of a shaft of a stationary gear of the gear train, because of the relative rotation of the boss part of the gear housing and the stationary gear shaft, which was turned in an inner surface of the driving gear housing working as a wiper pivot, so that a large surface pressure is generated on the outer periphery of the stationary gear shaft.

It is an object of the present invention to provide a bearing device of a windshield wiper, wherein wear and tear are much reduced.

Another object of the invention is to provide a bearing device of a windshield wiper with which the variations of swept angles are much smaller at the tips of the wiper blades.

A further object of the invention is to provide a bearing device of a windshield wiper, which allows to separate the output shaft of the wiper link from the crank arm formed as a gear housing member, and with which it is very convenient to mount the crank arm on an autobody.

An even further object of this invention contemplates the provision of a bearing device of a windshield wiper whose stationary gear is satisfactorily sliding on an inner surface of a cylindrical part of the crank arm, even when the crank arm is made by aluminum die casting and the stationary gear is made of usual materials such as sintered alloy, synthetic resin, or metals.

Still a further object of the present invention is the provision of a windshield wiper having an exceedingly small sized crank arm which is readily adaptable for use on vehicles.

According to the invention a bearing device of a windshield wiper according to the prior art portion of claim 1 is characterized in that the crank arm has a boss surrounded by a bearing member, the boss of said crank arm with said bearing member being rotatably mounted within the bore of the stationary gear and its associated boss.

It is preferred that a wiper link output shaft is coupled by a tapered means in the inner hole of the crank arm. It is further preferred that the boss of the crank arm is force-fitted within said bearing member.

It is also preferred that another bearing member of cylindrical form is force-fit within the bore of the stationary gear.

It is also preferred that the axis of the intermediate gear is out of the plane defined by the axis of said stationary gear and said driven gear, so that said intermediate gear and said driven gear are closely approached, and the length of said crank arm is shortened.

Embodiments of the invention are described in detail below with reference to the drawings, in which:

Fig. 1 is a grossly enlarged sectional view of a gear train portion of a first embodiment of the invention;

Fig. 2 is a view similar to Fig. 1 showing a second embodiment;

Fig. 3 is a schematic elevation indicating the whole organization of the wiper system according to the invention; and

Fig. 4 is a diagrammatic view showing the parts in several positions.

Referring now to the drawings, the first embodiment of the invention will be described.

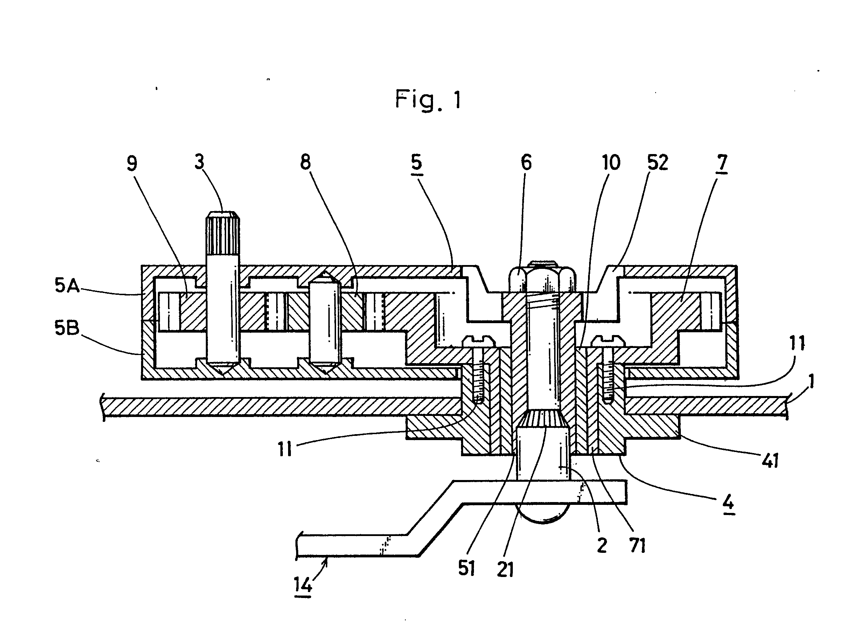

In Fig. 1, numeral 1 designates the body of a car. Numeral 2 designates a wiper link output shaft, which is inserted into a cylindrical boss 51 projectively provided with a crank arm 5 for guiding the output shaft 2; the output shaft 2 is fixedly connected with the crank arm 5 by its tapered serrations 21 and an upper end nut 6. The crank arm 5 also serving as a gear housing is made up from upper and lower members 5A and 5B secured together by fastening means (not shown) into a two-part hollow crank arm. A bearing member 10 of cylindrical shape is force-fit on the outer periphey of the cylindrical boss 51 of the crank arm 5. Numeral 7 designates a stationary gear, which is projectively provided with a boss 71 in the center of the gear 7. The cylindrical boss 51 of the crank arm 5 is rotatably supported in an inner bearing surface of the boss 71 of the stationary gear member 7 via the bearing member 10.

The stationary gear 7 forms a gear train with a driven gear 9 and an intermediate gear 8 which are rotatably supported in the crank arm 5. In the embodiment, the diameter of the stationary gear 7 is about three times the respective diameter of the gears 8 and 9.

Numeral 4 designates a socket as a wiper pivot, which is force-fit onto an outer periphery of the boss 71 of the stationary gear 7. In the first embodiment, the socket 4 and the stationary gear 7 are fixed to each other by many screws 11 in order to obtain more reliable fixation. The same effect may be attained by (not illustrated) press-fit pins, rivets and so on. The socket 4 has a flange part 41, and is directly fixed to the body 1 of a car by the flange part 41. It is also possible that the socket 4 is indirectly fixed to the body 1 through a bracket rigidly secured to the flange part 41. Numeral 3 designates a wiper arm head shaft which serves also as a shaft of the driven gear 9.

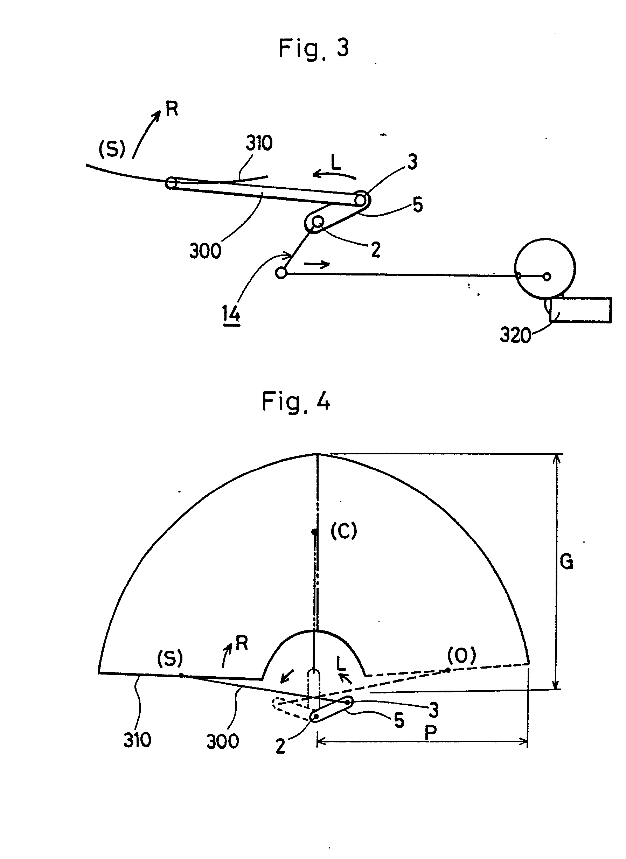

As shown in Figs. 3 and 4, a wiper blade 310 is connected to the wiper arm head shaft 3 through a wiper arm 300. On the other hand, the wiper link output shaft 2 is connected to a wiper motor 320 including an electric motor and reduction gears, through the wiper link 14.

As indicated in Fig. 1, working holes 52 are made on the crank arm 5, so that the screws 11 are easily fastened or un-fastened from outside of the crank arm 5 through these holes 52. The holes 52 are usually closed by a cover not shown in Fig. 1.

In operation, the wiper motor 320 is energized, its shaft starts rotating and the wiper link output shaft 2 is rocked reciprocally by the wiper motor 320 through the wiper link 14, and the crank arm 5 is swung by the output shaft 2. The wiper link output shaft 2 rocks with the boss 51 of the crank arm 5 and the bearing member 10, relatively to the boss 71 of the stationary gear 7. The inner periphery of the boss 71 is the only bearing surface which contacts the outer periphery of the bearing member 10, the diameter of which is larger than that of the wiper link output shaft 2, because the stationary gear 7 is fixed to the body 1 through its boss 71 and the socket 4, and the stationary gear 7 does not contact the wiper link output shaft 2.

Now, if the crank arm 5 is turned, for example counter-clockwise, then the stationary gear 7 rotates clockwise relatively to the crank arm 5, and the driven gear 8 which is meshing with the stationary gear 7 rotates counter-clockwise, the driven gear 9 which is meshing with the intermediate gear 8 rotates clockwise, then the wiper arm head shaft 3 turns clockwise with the driven gear 9, and the wiper arm 300 is swung clockwise. Therefore, the wiper arm head shaft 3 turns clockwise, as the shaft 2 is revolved counter-clockwise with the crank arm 5.

As shown in Fig. 4, the crank arm 5 and the wiper arm 300 are angled relative to each other at the starting point S. While the crank arm 5 turns about 60° counter-clockwise and reaches the center position C, the wiper arm 300 rotates about 180° clockwise as it revolves about 60° counter-clockwise, and the wiper arm 300 reaches the same center position C with the resultant clockwise rotation of 120°, and the crank arm 5 and the wiper arm 300 are aligned and stretched. During the further 60° counter-clockwise rotation of the crank arm 5, the wiper arm 300 reaches the open position 0, because of the 180° clockwise rotation of the wiper arm and the 60° counter-clockwise revolution of the crank arm, so that the crank arm 5 and the wiper arm 300 are in the bending condition. In this manner a broader wiping range G is accomplished in the center position C, where the crank arm 5 and the wiper arm 300 are in the stretching condition.

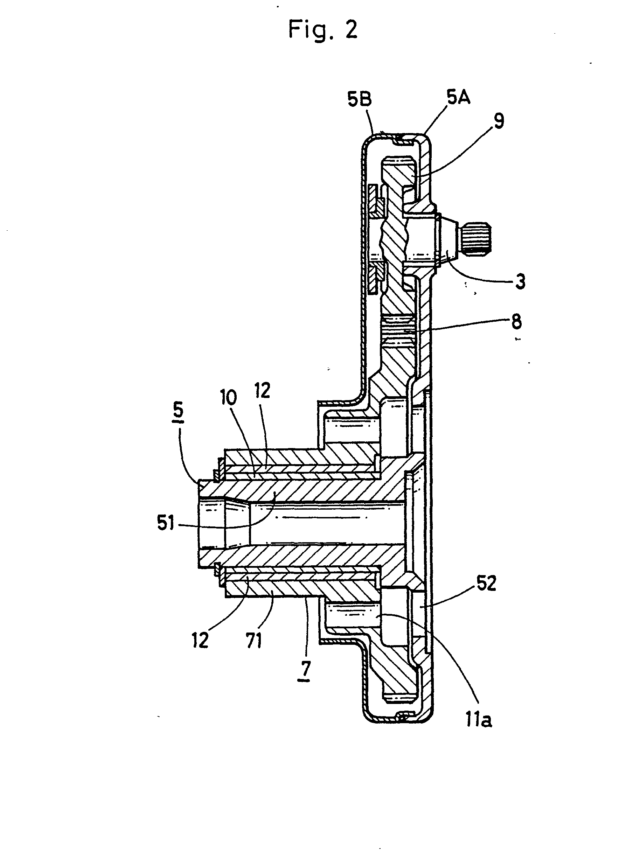

In the second embodiment shown in Fig. 2, the bearing member 10 of a hollow cylindrical shape is fixed by force fit on the outer periphery of the cylindrical boss 51 of the crank arm 5. The crank arm 5 which includes the boss 51 and integrally therewith the upper member 5A, is made by aluminum die casting, and the bearing member 10 is made of an optional material such as sintered metal, synthetic resin or metals. Another bearing member 12 of a hollow cylindrical form is force-fit within the inner periphery of the boss 71 of the stationary gear 7. The bearing member 12 is also made of sintered metal, synthetic resin, or metals. The cylindrical boss 51 of the crank arm 5 is rotatably supported by the stationary gear 7 at its boss 71 through both bearing members 10 and 12. Moreover, the stationary gear 7 is fixedly secured to the socket serving as wiper pivot (not shown in Fig. 2) by press-fit pins forcedly inserted in holes 11a through the working holes 52. The stationary gear 7 is made of an optional material such as sintered metal, synthetic resin, or metals. In the case where the stationary gear 7 can be made of lubricative synthetic resin, the crank arm 5 may be successfully rotated in the inner periphery of the stationary gear 7, without the bearing member 12.

The crank arm 5 is rectangularly formed like a box with short length and wide width comprising the members 5A and 5B, the lower member 5B of which is made of a steel plate.

The crank arm 5 retains the stationary gear 7 and the gears 8 and 9 between the members 5A and 5B, and the crank arm 5 further maintains gear pitches of these three gears 7, 8 and 9, and holds grease therein. The wipr link output shaft 2 (not indicated in Fig. 2) will be installed in the center hole of the boss 51 of the crank arm 5. The axis of the driven intermediate gear 8 which meshes with the driven gear 9 and the stationary gear 7 is disposed out of the plane defined by the axes of the stationary gear 7 and the driven gear 9. Therefore, the driven gear 9 and the stationary gear 7 are closely approached, and the length of the crank arm 5 is shortened.

The bearing member 10 of a cylindrical shape is force-fit on the outer periphery of the cylindrical boss 51, so that the bearing member 10 is not rotated by the drive force or load from the bearing member 12 but fixedly secured on the boss 51. The tolerance relation or dimensional relation between the bearing members 10 and 12 is made to correspond to regular specifications of bearing surfaces and shaft holes.

The operation of the second embodiment is like the operation of the first embodiment. While the cylindrical boss 51 is reciprocally turned by the output shaft 2 of the wiper link 14, the crank arm 5 is swung, and the driven gear 9 receives rotation force from the stationary gear member 7 by way of the driven intermediate gear 8, and the driven gear 9 is rotated with the wiper arm head shaft 3. The wiper arm 300 is reversely oscillated to and fro, due to the swing direction of the crank arm 5. Consequently, the wiper arm 300 and the crank arm 5 make a bending and stretching motion.

An advantage is realized by the second embodiment in that a sense of stability is given to the drivers of cars, because the axial length of the crank arm 5 is so short that the swing motion of this crank arm 5 may be hidden under a lower frame of the window and is not seen.

## Claims

1. A bearing device of a windshield wiper comprising a crank arm (5) for rotating to and fro about an axis of rotation, a wiper arm, a fixed socket (4) which is concentric to the axis of rotation of the crank arm (5), a blade fastened to the wiper arm, a stationary gear (7) provided with a boss (71) mounted within the socket (4), an intermediate gear (8) meshing with said stationary gear (7) and carried on a shaft mounted in said crank arm (5), a driven gear (9) meshing with the intermediate gear (8) mounted in said crank arm (5) and secured to a shaft to one end of which the root of the wiper arm is fastened, characterized in that the crank arm (5) has a boss (51) surrounded by a bearing member (10), the boss (51) of said crank arm (5) with said bearing member (10) being rotatably mounted within the bore of the stationary gear (7) and its associated boss (71).

2. A bearing device as claimed in claim 1, characterized in that a wiper link output shaft (2) is coupled by a tapered means (21) in the inner hole of the crank arm (5).

3. A bearing device as claimed in claim 1 or claim 2, characterized in that the boss (51) of the crank arm (5) is force-fit within said bearing member (10).

4. A bearing device as claimed in claim 1 to claim 3, characterized in that another bearing member (12) of cylindrical form is force-fitted within the bore of the stationary gear (7).

5. A bearing device as claimed in claim 1, characterized in that the axis of the intermediate gear (8) is out of the plane defined by the axes of said stationary gear (7) and said driven gear (9), so that said intermediate gear (8) and said driven gear (9) are closely approached, and the length of said crank arm (5) is shortened.

## Patentansprüche

1. Lagereinrichtung eines Scheibenwischers mit einem Kurbelarm (5) zur Hin- und Herdrehung um eine Rotationsachse, einem Wischerarm, einen festen Sockel (4), der konzentrisch zur Rotationsachse des Kurbelarms (5) angeordnet ist, einem am Wischerarm befestigten Blatt, einem stationären Getrieberad (7), das mit einem Vorsprung (71) versehen ist, der innerhalb des Sockels (4) montiert ist, einem Zwischengetrieberad (8), das mit dem stationären Getrieberad (7) kämmt und auf einer Welle getragen ist, die in dem Kurbelarm (5) montiert ist, einem angetriebenen Getrieberad (9), das mit dem in dem Kurbelarm (5) montierten Zwischengetrieberad (8) kämmt und an einer Welle festgelegt ist, an deren einem Ende der Ansatz des Wischerarms befestigt ist, dadurch gekennzeichnet, daß der Kurbelarm (5) einen Vorsprung (51) besitzt, der von einem Lagerelement (10) umgeben ist, daß der Vorsprung (51) des Kurbelarms (5) mit dem Lagerelement (10) drehbar innerhalb der Bohrung des stationären Getrieberads (7) und seines zugeordneten Vorsprungs (71) montiert ist.

2. Lagereinrichtung nach Anspruch 1, dadurch gekennzeichnet, daß eine Wischergestänge-Ausgangswelle (2) mittels eines Kegeleinrichtung (21) in dem inneren Loch des Kurbelarms (5) gekoppelt ist.

3. Lagereinrichtung nach Anspruch 1 oder 2, dadurch gekennzeichnet, daß der Vorsprung (51) des Kurbelarms (5) im Preßsitz in dem Lagerelement (10) sitzt.

4. Lagereinrichtung nach Anspruch 1 oder 3, dadurch gekennzeichnet, daß ein weiteres Lagerelement (12) mit zylindrischer Gestalt in die Bohrung des stationären Getrieberads (7) im Preßsitz eingepaßt ist.

5. Lagereinrichtung nach Anspruch 1, dadurch gekennzeichnet, daß die Achse des Zwischengetrieberads (8) außerhalb der Ebene liegt, die durch die Achsen des stationären Getrieberads (7) und des angetriebenen Getrieberads (9) definiert ist, so daß das Zwischengetrieberad (9) und das angetriebene Getrieberad (9) nahe aneinandergebracht sind und die Länge des Kurbelarms (5) verkürzt ist.

## Revendications

1. Palier d'un essuie-glace de pare-brise comprenant un bras de manivelle (5) tournant, dans les deux sens, autour d'un axe de rotation, un bras de monture d'essuie-glace, une virole fixe (4) concentrique à l'axe de rotation du bras de manivelle (5), une lame fixée au bras de monture d'essuie-glace, un pignon fixe (7) muni d'un moyeu (71) monté dans la virole (4), un pignon intermédiaire (8) engrenant ledit pignon fixe (7) et porté par un arbre monté dans ledit bras de manivelle (5), un pignon mené (9) engrenant le pignon intemédiaire (8) monté dans ledit bras de manivelle (5), et fixé à un arbre à une extrémité duquel est fixée la base du bras de monture, caractérisé en ce que le bras de manivelle (5) a un moyeu (51) entouré d'un élément de palier (10), le moyeu (51) dudit bras de manivelle (5) et ledit élément de palier (10) étant montés rotatifs dans l'alésage du pignon fixe (7) et son moyeu (71) correspondant.

2. Palier selon la revendication 1, caractérisé en ce qu'un arbre (2) de sortie de liaison d'essuie-glace est relié par des moyens coniques (21) à l'intérieur du trou du bras de manivelle (5).

3. Palier selon la revendication 1 ou 2, caractérisé en ce que le moyeu (51) du bras de manivelle (5) est ajusté serré sur ledit élément de palier (10).

4. Palier selon la revendication 1 à 3, caractérisé en ce qu'un autre élément de palier (12) de forme cylindrique est ajusté serré dans l'alésage du pignon fixe (7).

5. Palier selon la revendication 1, caractérisé en ce que l'axe du pignon intermédiaire (8) est en dehors du plan défini par les axes dudit pignon fixe (7) et dudit pignon mené (9), de façon à ce que ledit pignon intermédiaire (8) et ledit pignon mené (9) soient étroitement rapprochés et que la longueur dudit bras de manivelle (5) soit raccourcie.

Fig. 1

EP 0 180 142 B1

# Fig. 2

Fig. 3

Fig. 4